# EUROPEAN PATENT APPLICATION

(11) **EP 4 741 257 A1**
(43) Date of publication of application: **13.05.2026**
(21) Application number: 25214597.4
(22) Date of filing: 10.11.2025
(51) Int. Cl.: B62B 7/14, B62B 7/06

(54) **A STROLLER**

(30) Priority: 08.11.2024 CN 202411586577
(71) Applicant: Dorel France, 49309 Cholet Cedex (FR)
(72) Inventor: Yan, Guang, Guangdong (CN); Huang, Weishi, Guangdong (CN); Liang, Jianhua, Guangdong (CN)
(74) Representative: Vidon Brevets & Stratégie

(57) **Abstract**

The present invention discloses a stroller, comprising:
a foldable frame (1) comprising a first support rod (101) and a second support rod (102), the distance between the first and second support rods (101, 102) being able to vary in the process of folding or unfolding the frame (1) ; and
a device (2) for receiving a child, wherein the device (2) can be connected to both the first and second support rods (101, 102), the device (2) being provided with at least one first connecting assembly (21) connected to the first support rod (101) and at least one second connecting assembly (22) connected to the second support rod (102),
said at least one second connecting assembly (22) being able to move with the second support rod (102) when the frame (1) is folded or unfolded, so that said device (2) remains connected to the first support rod (101) through the first connecting assembly (21) and connected to the second support rod (102) through the second connecting assembly (22) regardless of any changes in the distance between the first support rod (101) and the second support rod (102).

## Description

### TECHNICAL FIELD

The present invention relates to the technical field of strollers, and specifically to a foldable stroller.

### BACKGROUND

A device for receiving a child such as a carrycoat is usually suitable for babies from birth to about 15 months old. For a stroller with a device such as a carrycoat, the device is usually positioned on the two support rods of the frame of the stroller. In order to ensure the stability of the device, the two support rods must be spaced at a certain distance. Therefore, the two support rods are mounted on different components of the frame, causing that the distance between the two support rods changes with folding of the frame when the frame is folded, which makes it difficult to connect the device to the frame. When the stroller needs to be folded, the device is usually removed from the frame first, and then the frame is folded, which brings inconvenience to the folding.

### SUMMARY

In view of the above-mentioned technical problem of the prior art, when a stroller with a device for receiving a child is folded, the device needs to be removed from the frame first, and then the frame is folded, which is troublesome in operation.

The present invention provides the following technical solution to solve the technical problem: i.e. a foldable stroller, including a foldable frame and a foldable device for receiving a child, where the frame includes a first support rod and a second support rod, the distance between the first and second support rods being able to vary in the process of folding or unfolding the frame; and the device can be connected to both the first support rod and the second support rod, the device being provided with at least a first connecting assembly connected to the first support rod and at least a second connecting assembly connected to the second support rod, and when the frame is folded or unfolded, the second connecting assembly can move with the second support rod, so that said device remains connected to the first support rod through the first connecting assembly and connected to the second support rod through the second connecting assembly regardless of any changes in the distance between the first support rod and the second support rod.

According to a particular aspect of the invention, the distance between said at least one first connecting assembly and said at least one second connecting assembly is aligned to the distance between the first support rod and the second support rod when the frame is folded or unfolded.

According to a particular aspect of the invention, the first and second support rods, in the unfolded state of the frame, are in a substantially horizontal plane and support the device for receiving a child ; and wherein during the process of the frame being folded, the plane defined by the first and second support rods changes gradually from a substantially horizontal level to a non-horizontal level and thus turns the device into a non-used position; during the process of the frame being unfolded, the plane defined by the first and second support rods changes gradually from a non-horizontal level to a substantially horizontal level and thus turns the device into the position for receiving a child.

According to a particular aspect of the invention, the second connecting assembly includes a guide rail and a sliding base, the guide rail being disposed on the bottom portion of the device, the sliding base being slidably connected to the guide rail, and the sliding base being connected to the second support rod.

According to a particular aspect of the invention, an elastic member for driving the sliding base to reset is disposed at the bottom portion of the device.

According to a particular aspect of the invention, the first connecting assembly is detachably connected to the first support rod, and the second connecting assembly is detachably connected to the second support rod.

According to a particular aspect of the invention, the first connecting assembly includes a first connecting base, a first clamping hook, and a first torsion spring, the first connecting base being provided with a first concave groove for positioning the first support rod, a middle portion of the first clamping hook being pivoted to the first connecting base, and the first torsion spring being disposed on the first connecting base to drive the first clamping hook to lock the first support rod into the first concave groove; and the sliding base being provided with a second concave groove for positioning the second support rod, a second clamping hook and a second torsion spring being disposed on the sliding base, a middle portion of the second clamping hook being pivoted to the sliding base, the second torsion spring being disposed on the sliding base to drive the second clamping hook to lock the second support rod into the second concave groove, and a first unlocking mechanism simultaneously driving the first clamping hook and the second clamping hook to unlock being disposed on the bottom portion of the device.

According to a particular aspect of the invention, the first clamping hook and second clamping hook are configured in opposite directions.

According to a particular aspect of the invention, a first unlocking mechanism simultaneously driving the first clamping hook and the second clamping hook to unlock is disposed on the bottom portion of the device.

According to a particular aspect of the invention, the first unlocking mechanism includes a first unlocking base, a first unlocking block, a first unlocking pull wire, and a second unlocking pull wire, the first unlocking base being disposed on the bottom portion of the device, and the first unlocking block being slidably connected to the first unlocking base; one end of an outer tube of the first unlocking pull wire being connected to the first unlocking base, the other end of the outer tube of the first unlocking pull wire being connected to the first connecting base, one end of an inner core of the first unlocking pull wire being connected to the first unlocking block, and the other end of the inner core of the first unlocking pull wire being connected to the first clamping hook; and one end of an outer tube of the second unlocking pull wire being connected to the first unlocking base, the other end of the outer tube of the second unlocking pull wire being connected to the sliding base, one end of an inner core of the second unlocking pull wire being connected to the first unlocking block, and the other end of the inner core of the second unlocking pull wire being connected to the second clamping hook, so that the first clamping hook and the second clamping hook can be simultaneously driven to unlock when the first unlocking block is driven.

According to a particular aspect of the invention, the device includes a bottom base, an enclosure, a first folding rod, and a second folding rod, a bottom portion of the enclosure being provided with a first sliding groove, the bottom base being provided with a second sliding groove, an upper end of the first folding rod being pivoted to the bottom portion of the enclosure, a lower portion of the first folding rod being slidably connected to the second sliding groove, an upper end of the second folding rod being slidably connected in the first sliding groove, a lower portion of the second folding rod being pivoted to the bottom base, a middle portion of the first folding rod and a middle portion of the second folding rod being hinged with each other, a locking mechanism that locks the lower portion of the first folding rod when the device is unfolded being disposed on the bottom base, and a second unlocking mechanism for driving the locking mechanism to unlock to enable the device to be folded being further disposed on the bottom base.

According to a particular aspect of the invention, the locking mechanism includes a locking base, a lock tongue, and a locking spring, the locking base being disposed on a bottom portion of the bottom base, the lock tongue being slidably connected to the locking base, and the locking spring being disposed on the locking base to drive the lock tongue to extend out to lock the lower portion of the first folding rod.

According to a particular aspect of the invention, the second unlocking mechanism includes a second unlocking base, a second unlocking block, and a third unlocking pull wire, the second unlocking base being disposed on the bottom base, and the second unlocking block being slidably connected to the second unlocking base; and one end of an outer tube of the third unlocking pull wire being connected to the second unlocking base, the other end of the outer tube of the third unlocking pull wire being connected to the locking base, one end of an inner core of the third unlocking pull wire being connected to the second unlocking block, and the other end of the inner core of the third unlocking pull wire being connected to the lock tongue.

According to a particular aspect of the invention, the frame includes a front leg, a front wheel assembly, a rear leg, a rear wheel assembly, a middle connecting rod, a hand push rod, a first linkage rod, and a second linkage rod, the front wheel assembly being disposed at a lower end of the front leg, the rear wheel assembly being disposed at a lower end of the rear leg, one end of the front leg being pivoted to the rear leg, one end of the middle connecting rod being pivoted to the rear leg, a lower end of the hand push rod being pivoted to the other end of the middle connecting rod, one end of the first linkage rod being hinged to the front leg, the other end of the first linkage rod being hinged to a lower end of the second linkage rod, a lower portion of the second linkage rod being hinged to the rear leg, an upper end of the second linkage rod being hinged to the hand push rod, so that when the hand push rod is driven to be folded relative to the middle connecting rod, the middle connecting rod and the front leg can be driven to rotate relative to the rear leg to implement folding, the first support rod being disposed on the middle connecting rod, the second support rod being disposed on the second linkage rod, and a frame locking assembly for locking a relative position between the middle connecting rod and the hand push rod after the frame is unfolded being disposed between the middle connecting rod and the hand push rod.

According to a particular aspect of the invention, the frame locking assembly includes an upper locking joint, a lower locking joint, a locking switching block, a reset member, a rotary unlocking block, a fourth unlocking pull wire, and an unlocking switch, the upper locking joint being connected to the lower end of the hand push rod, the lower locking joint being connected to an upper end of the middle connecting rod, the upper locking joint being rotatably connected to the lower locking joint, the upper locking joint being provided with a first accommodating cavity, the lower locking joint being provided with a second accommodating cavity, the locking switching block being able to slide in an axial direction between the first accommodating cavity and the second accommodating cavity, the locking switching block being provided with a locking protruding edge, a first locking concave groove matched with the locking protruding edge being disposed in the first accommodating cavity, a second locking concave groove matched with the locking protruding edge being disposed in the second accommodating cavity, the reset member being disposed in the second accommodating cavity and being used for enabling the locking protruding edge on the locking switching block to be simultaneously clamped into the first locking concave groove and the second locking concave groove, the rotary unlocking block being rotated in the second accommodating cavity, a guide inclined surface being disposed between the rotary unlocking block and the second accommodating cavity, when the unlocking block is rotated, the locking protruding edge on the locking switching block being adapted to be pushed to be disengaged from the first locking concave groove to unlock, one end of an inner core of the fourth unlocking pull wire being connected to the rotary unlocking block, and the other end of the inner core of the fourth unlocking pull wire being connected to the unlocking switch.

The invention also relates according to a device for receiving a child adapted to be mounted on a stroller frame, said device comprising at least one first connecting assembly for being connected to a first support rod of the stroller frame and at least one second connecting assembly for being connected to a second support rod of the stroller frame, said at least one second connecting assembly being able to move with the second support rod when the frame is folded or unfolded, so that said device remains connected to the first support rod through the first connecting assembly and connected to the second support rod through the second connecting assembly during folding and unfolding of the frame.

According to a particular aspect of the invention, said at least one first connecting assembly can be detachably connected to the first support rod, and the at least one second connecting assembly can be detachably connected to the second support rod.

According to a particular aspect of the invention, said at least one second connecting assembly comprises a guide rail and a sliding base, the guide rail being disposed on the bottom portion of the device, the sliding base being slidably connected to the guide rail, and the sliding base being connected to the second support rod.

According to a particular aspect of the invention, an elastic member for driving the sliding base to reset is disposed on the bottom portion of the device.

According to a particular aspect of the invention, said at least one first connecting assembly comprises a first connecting base, a first clamping hook, and a first torsion spring, the first connecting base being provided with a first concave groove for positioning the first support rod, a middle portion of the first clamping hook being pivoted to the first connecting base, and the first torsion spring being disposed on the first connecting base to drive the first clamping hook to lock the first support rod into the first concave groove; and the sliding base being provided with a second concave groove for positioning the second support rod, a second clamping hook and a second torsion spring being disposed on the sliding base, a middle portion of the second clamping hook being pivoted to the sliding base, the second torsion spring being disposed on the sliding base to drive the second clamping hook to lock the second support rod into the second concave groove.

According to a particular aspect of the invention, the first clamping hook and second clamping hook are configured in opposite directions.

According to a particular aspect of the invention, a first unlocking mechanism simultaneously driving the first clamping hook and the second clamping hook to unlock is disposed on the bottom portion of the device.

According to a particular aspect of the invention, the first unlocking mechanism comprises a first unlocking base, a first unlocking block, a first unlocking pull wire, and a second unlocking pull wire, the first unlocking base being disposed on the bottom portion of the device, and the first unlocking block being slidably connected to the first unlocking base; one end of an outer tube of the first unlocking pull wire being connected to the first unlocking base, the other end of the outer tube of the first unlocking pull wire being connected to the first connecting base, one end of an inner core of the first unlocking pull wire being connected to the first unlocking block, and the other end of the inner core of the first unlocking pull wire being connected to the first clamping hook; and one end of an outer tube of the second unlocking pull wire being connected to the first unlocking base, the other end of the outer tube of the second unlocking pull wire being connected to the sliding base, one end of an inner core of the second unlocking pull wire being connected to the first unlocking block, and the other end of the inner core of the second unlocking pull wire being connected to the second clamping hook, so that the first clamping hook and the second clamping hook can be simultaneously driven to unlock when the first unlocking block is driven.

According to a particular aspect of the invention, the device comprises a bottom base, an enclosure, a first folding rod, and a second folding rod, a bottom portion of the enclosure being provided with a first sliding groove, the bottom base being provided with a second sliding groove, an upper end of the first folding rod being pivoted to the bottom portion of the enclosure, a lower portion of the first folding rod being slidably connected to the second sliding groove, an upper end of the second folding rod being slidably connected in the first sliding groove, a lower portion of the second folding rod being pivoted to the bottom base, a middle portion of the first folding rod and a middle portion of the second folding rod being hinged with each other, a locking mechanism that locks the lower portion of the first folding rod when the device is unfolded being disposed on the bottom base, and a second unlocking mechanism for driving the locking mechanism to unlock to enable the device to be folded being further disposed on the bottom base.

According to a particular aspect of the invention, the locking mechanism comprises a locking base, a lock tongue, and a locking spring, the locking base being disposed on a bottom portion of the bottom base, the lock tongue being slidably connected to the locking base, and the locking spring being disposed on the locking base to drive the lock tongue to extend out to lock the lower portion of the first folding rod.

According to a particular aspect of the invention, the second unlocking mechanism comprises a second unlocking base, a second unlocking block, and a third unlocking pull wire, the second unlocking base being disposed on the bottom base, and the second unlocking block being slidably connected to the second unlocking base; and one end of an outer tube of the third unlocking pull wire being connected to the second unlocking base, the other end of the outer tube of the third unlocking pull wire being connected to the locking base, one end of an inner core of the third unlocking pull wire being connected to the second unlocking block, and the other end of the inner core of the third unlocking pull wire being connected to the lock tongue.

The stroller of the present invention has the following beneficial effects:
1. The first connecting assembly connected to the first support rod is disposed on the bottom portion of the device for receiving a child, the second connecting assembly connected to the second support rod is disposed on the bottom portion of the device, and when the frame is folded or unfolded, the second connecting assembly can move with the second support rod. By adopting this connection manner, regardless of any changes in the distance between the first support rod and the second support rod, it is ensured that the device is connected to the first support rod through the first connecting assembly and that the device is connected to the second support rod through the second connecting assembly, so that when the frame needs to be folded, the device does not need to be detached from a position between the first support rod and the second support rod, thus achieving an advantage of convenient operation.
2. The elastic member for driving the sliding base to reset is disposed on the bottom portion of the device for receiving a child. Through an elastic force of the elastic member, a gap between the bottom portion of the device and the sliding base can be reduced, and the frame may be driven to reset when the frame is folded.
3. When the first unlocking block on the device for receiving a child is driven to move, inner cores of the first unlocking pull wire and the second unlocking pull wire are simultaneously driven to move, thereby driving the first clamping hook and the second clamping hook to unlock, so that the device may be removed from the frame quickly. In addition, one end of the outer tube of the first unlocking pull wire is connected to the first unlocking base, and the other end of the outer tube of the second unlocking pull wire is connected to the sliding base. By adopting this design, the first connecting assembly and the second connecting assembly do not interfere with each other, and when the sliding base moves with the second support rod, unlocking can also be implemented.
4. The locking mechanism of the device for receiving a child locks the lower portion of the first folding rod into the second sliding groove, and after the second unlocking mechanism drives the locking mechanism to unlock, the lower portion of the first folding rod moves leftwards along the second sliding groove to fold the device, thus achieving the advantage of convenient operation.
5. When the device for receiving a child needs to be unlocked, the second unlocking block only needs to be driven to move, and the second unlocking block can drive the inner core of the third unlocking pull wire, thereby driving the second unlocking block to retract into the second unlocking base to implement unlocking, thus achieving the advantage of convenient operation.
6. When the frame is folded, the frame locking assembly is first made to release a locking relationship between the middle connecting rod and the hand push rod, then the hand push rod is driven to be folded relative to the middle connecting rod, meanwhile, the front leg is driven to be folded relative to the rear leg, and the middle connecting rod is driven to be folded relative to the rear leg, so that the folding can be completed, thus achieving the advantage of convenient operation; and the first linkage rod and the second linkage rod have two functions, one of which is used for improving the overall stability and reliability of the frame, and the other is used for linking the middle connecting rod, the hand push rod, and the rear leg during folding, so that the folding is more convenient.

The present invention is further described below with reference to the accompanying drawings and specific embodiments.

### BRIEF DESCRIPTION OF THE DRAWINGS

FIG. 1 is a schematic structural diagram 1 of a stroller according to the present invention;
FIG. 2 is a schematic structural diagram 2 of a stroller according to the present invention;
FIG. 3 is a schematic structural diagram 1 of a carrycot in a stroller according to the present invention;
FIG. 4 is a schematic structural diagram 2 of a carrycot in a stroller according to the present invention;
FIG. 5 is a schematic exploded view 1 of a first connecting assembly and a second connecting assembly of a carrycot according to the present invention;
FIG. 6 is a schematic exploded view 2 of a first connecting assembly and a second connecting assembly of a carrycot according to the present invention;
FIG. 7 is a schematic exploded view of a bottom base, a locking mechanism, and a second unlocking mechanism of a carrycot according to the present invention;
FIG. 8 is a side view schematic structural diagram of a frame in a stroller according to the present invention;
FIG. 9 is a schematic exploded diagram of a frame in a stroller according to the present invention;
FIG. 10 is a schematic exploded view 1 of a frame locking assembly of a frame according to the present invention;
FIG. 11 is a schematic exploded view 2 of a frame locking assembly of a frame according to the present invention;
FIG. 12 is a schematic structural diagram of a stroller in a folded state according to the present invention; and
FIG. 13 is a schematic structural diagram of a frame of a stroller in a folded state according to the present invention.

### DETAILED DESCRIPTION

Embodiments of the present invention are described in detail below with reference to the accompanying drawings.

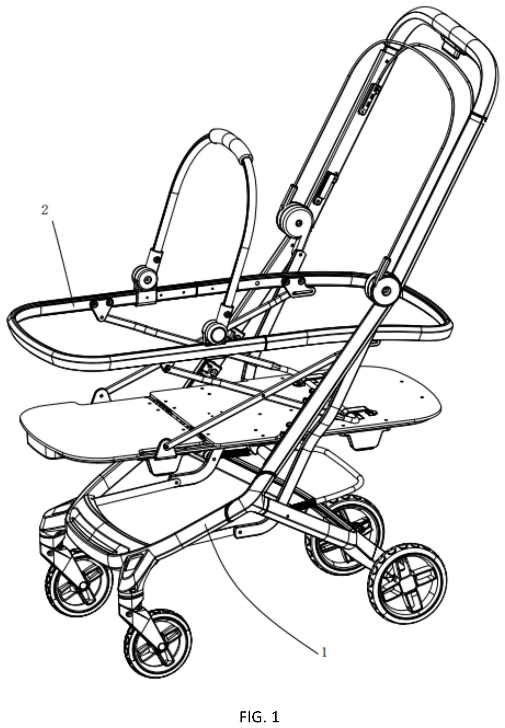

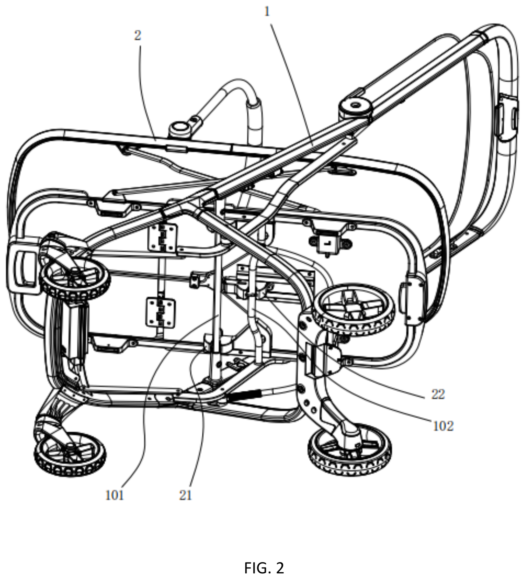

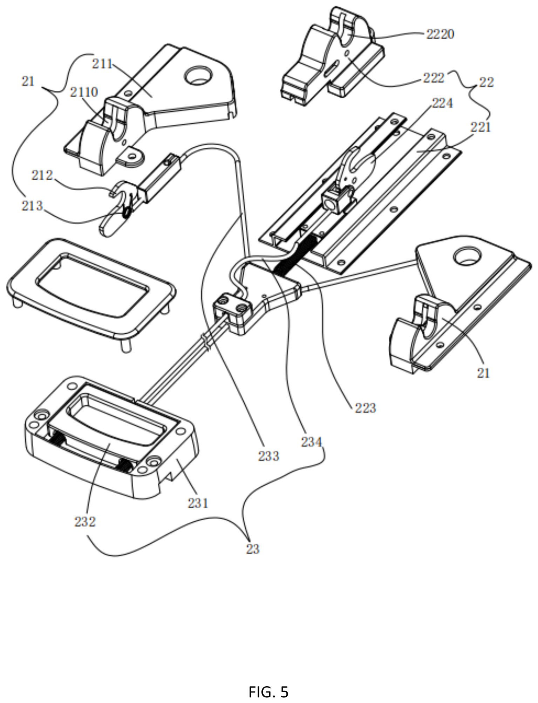

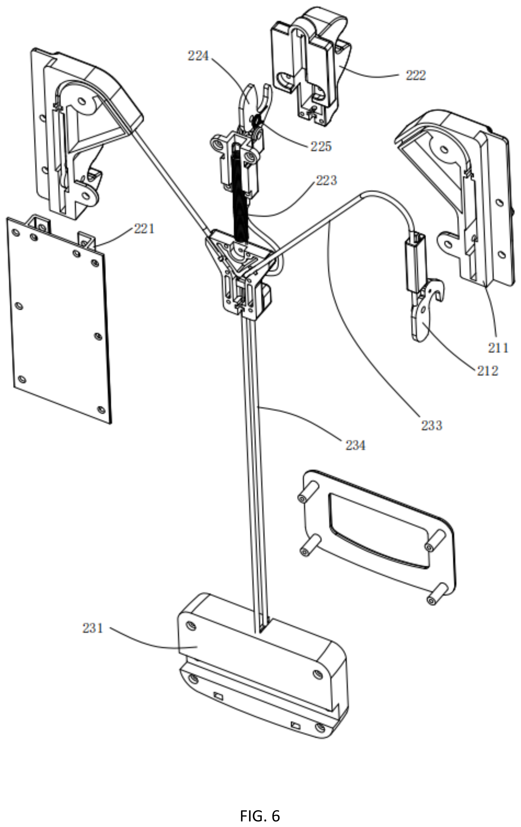

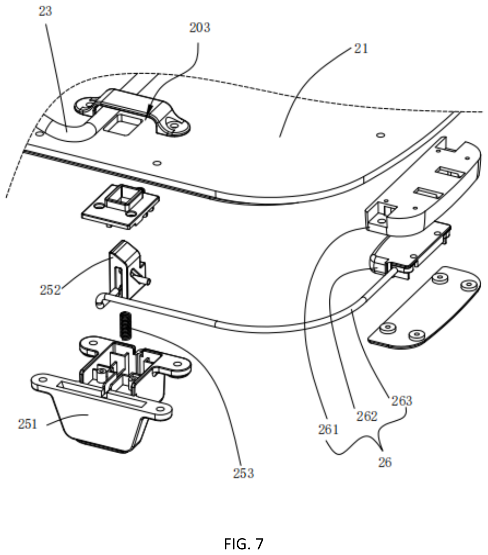

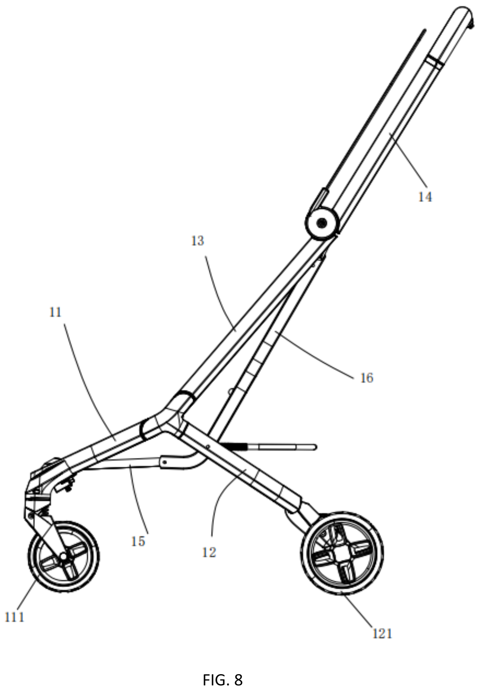

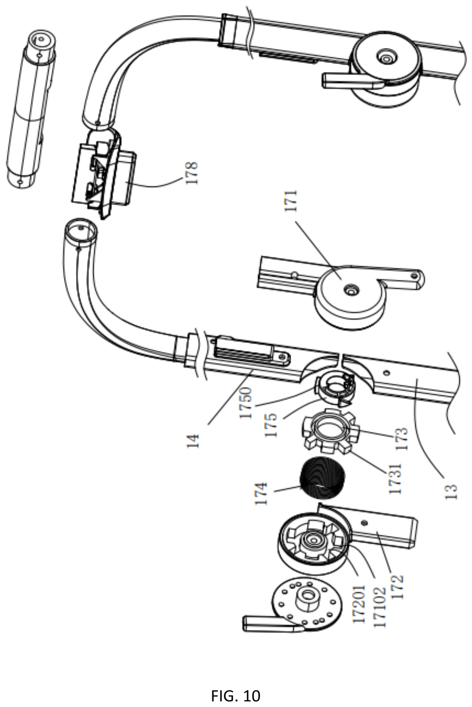

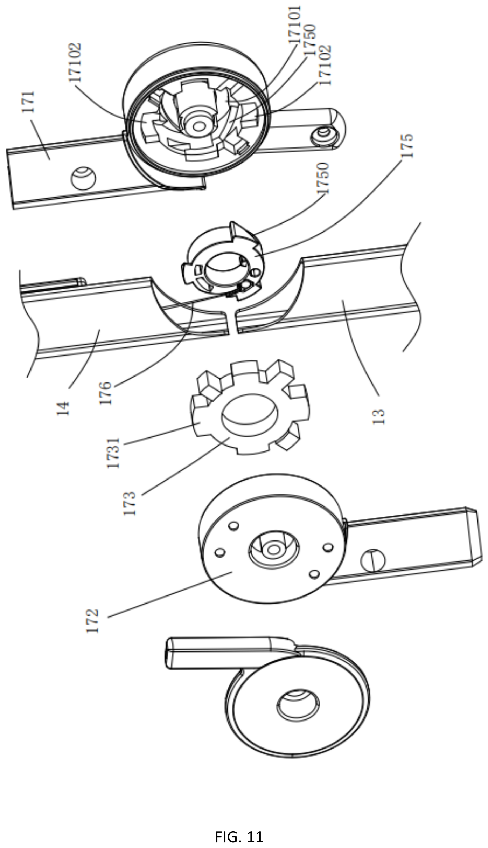

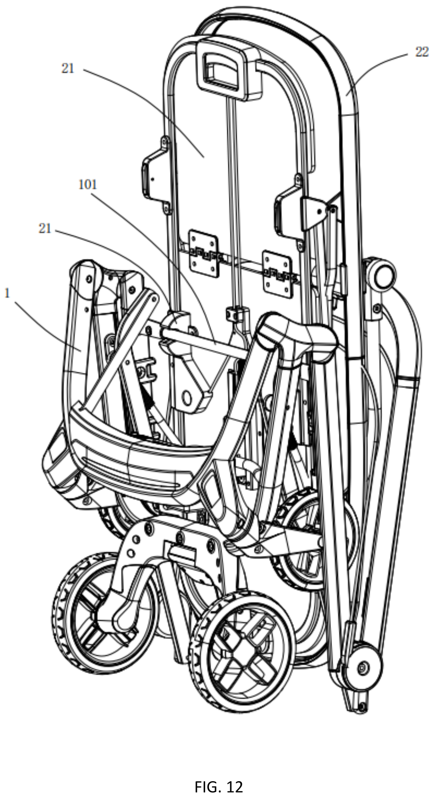

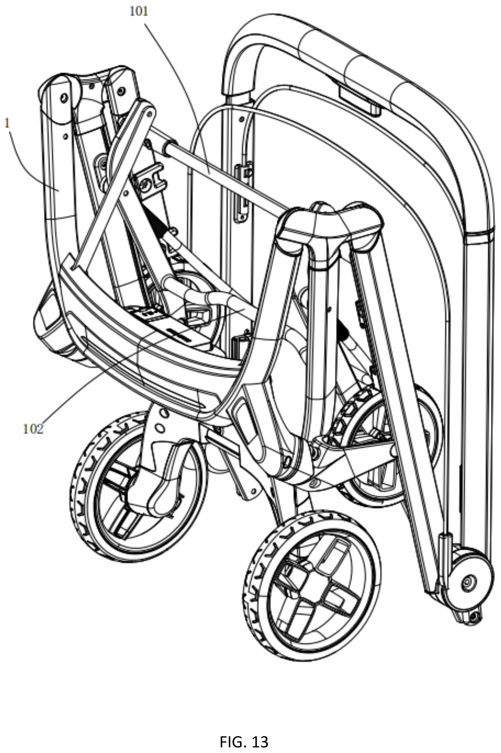

As shown in FIG. 1 to FIG. 13, a stroller according to an embodiment of the invention includes a foldable frame 1 and a foldable carrycot 2, where the frame 1 includes a first support rod 101 and a second support rod 102; and the carrycot 2 is connected between the first support rod 101 and the second support rod 102, a first connecting assembly 21 connected to the first support rod 101 is disposed on a bottom portion of the carrycot 2, a second connecting assembly 22 connected to the second support rod 102 is disposed on the bottom portion of the carrycot 2, and when the frame 1 is folded or unfolded, the second connecting assembly 22 can move with the second support rod 102. Advantageously, the first connecting assembly connected to the first support rod is disposed on the bottom portion of the carrycot, the second connecting assembly connected to the second support rod is disposed on the bottom portion of the carrycot, and when the frame is folded or unfolded, the second connecting assembly can move with the second support rod.

By adopting this connection manner, regardless of any changes in the distance between the first support rod and the second support rod, it is ensured that the carrycot is connected to the first support rod through the first connecting assembly and connected to the second support rod through the second connecting assembly, and when the frame needs to be folded, the carrycot does not need to be detached from a position between the first support rod and the second support rod, thus achieving an advantage of convenient operation.

In order to implement that the second connecting assembly 22 can move with the second support rod 102, in this embodiment, the second connecting assembly 22 includes a guide rail 221 and a sliding base 222, the guide rail 221 is disposed on the bottom portion of the carrycot 2, the sliding base 222 is slidably connected to the guide rail 221, and the sliding base 222 is connected to the second support rod 102. The second support rod 102 is connected to the sliding base 222 slidably connected to the guide rail 221, which can adapt to a reliable connection when the distance between the first support rod 101 and the second support rod 102 changes.

In this embodiment, the elastic member 223 for driving the sliding base 222 to reset is disposed on the bottom portion of the carrycot 2; and the elastic member 223 may be a spring. Through an elastic force of the elastic member 223, a gap between the bottom portion of the carrycot 2 and the sliding base 222 can be reduced. In addition, the frame may be driven to reset when the frame is folded.

In this embodiment, the first connecting assembly 21 is detachably connected to the first support rod 101, and the second connecting assembly 22 is detachably connected to the second support rod 102, so that the carrycot 2 can be detached from the frame 1, which facilitates cleaning the carrycot or replacing the carrycot with a seat.

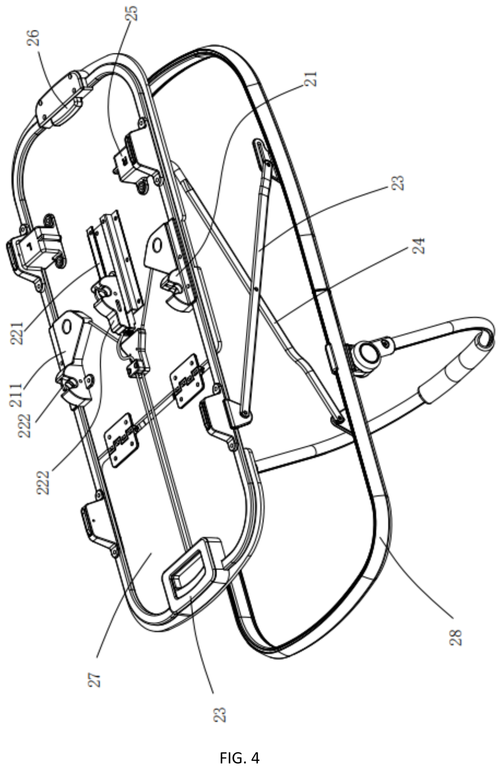

As shown in FIG. 4, FIG. 5, and FIG. 6, in this embodiment, the first connecting assembly 21 includes a first connecting base 211, a first clamping hook 212, and a first torsion spring 213, the first connecting base 211 is provided with a first concave groove 2110 for positioning the first support rod 101, a middle portion of the first clamping hook 212 is pivoted to the first connecting base 211, the first torsion spring 213 is disposed on the first connecting base 211 to drive the first clamping hook 212 to lock the first support rod 101 into the first concave groove 2110, a bottom portion of the first concave groove 2110 is arc-shaped, and after being locked by the first clamping hook 212, relative rotation is facilitated when the frame is folded or unfolded; and the sliding base 222 is provided with a second concave groove 2220 for positioning the second support rod 102, a second clamping hook 224 and a second torsion spring 225 are disposed on the sliding base 222, a middle portion of the second clamping hook 224 is pivoted to the sliding base 222, the second torsion spring 225 is disposed on the sliding base 222 to drive the second clamping hook 224 to lock the second support rod 102 into the second concave groove 2220, a bottom portion of second concave groove 2220 is arc-shaped, after being locking by the second clamping hook 224, relative rotation is facilitated when the frame is folded or unfolded, and a first unlocking mechanism 23 simultaneously driving the first clamping hook 212 and the second clamping hook 224 to unlock is disposed on the bottom portion of the carrycot 2. The first support rod 101 is locked into the first concave groove 2110 through the first clamping hook 212, the second support rod 102 is locked into the second concave groove 2220 through the second clamping hook 224, and the first clamping hook 212 and the second clamping hook 224 are simultaneously driven to implement unlocking through the first unlocking mechanism 23.

In this embodiment, the first unlocking mechanism 23 includes a first unlocking base 231, a first unlocking block 232, a first unlocking pull wire 233, and a second unlocking pull wire 234, the first unlocking base 231 is disposed on the bottom portion of the carrycot 2, and the first unlocking block 232 is slidably connected to the first unlocking base 231; one end of an outer tube of the first unlocking pull wire 233 is connected to the first unlocking base 231, the other end of the outer tube of the first unlocking pull wire 233 is connected to the first connecting base 211, one end of an inner core of the first unlocking pull wire 233 is connected to the first unlocking block 232, and the other end of the inner core of the first unlocking pull wire 233 is connected to the first clamping hook 212; and one end of an outer tube of the second unlocking pull wire 234 is connected to the first unlocking base 231, the other end of the outer tube of the second unlocking pull wire 234 is connected to the sliding base 222, one end of an inner core of the second unlocking pull wire 234 is connected to the first unlocking block 232, and the other end of the inner core of the second unlocking pull wire 234 is connected to the second clamping hook 224, so that the first clamping hook 212 and the second clamping hook 224 can be simultaneously driven to unlock when the first unlocking block 232 is driven. When the first unlocking block 232 is driven to move, the inner cores of the first unlocking pull wire 233 and the second unlocking pull wire 234 are simultaneously driven to move, thereby driving the first clamping hook 212 and the second clamping hook 224 to unlock. In addition, one end of the outer tube of the first unlocking pull wire 233 is connected to the first unlocking base 231, and the other end of the outer tube of the second unlocking pull wire 234 is connected to the sliding base 222. By adopting this design, the first connecting assembly and the second connecting assembly do not interfere with each other, and when the sliding base 222 moves with the second support rod, unlocking can also be implemented.

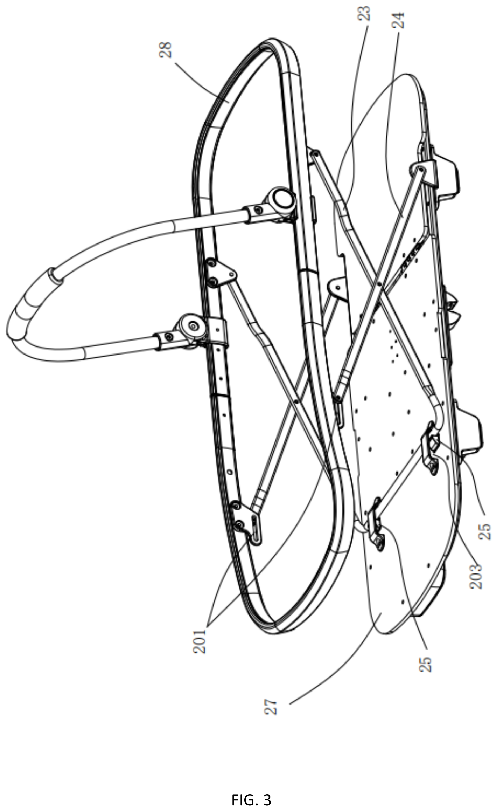

As shown in FIG. 3, FIG. 4, and FIG. 7, the carrycot 2 includes a bottom base 27, an enclosure 28, a first folding rod 23, and a second folding rod 24, a bottom portion of the enclosure 28 is provided with a first sliding groove 201, the bottom base 27 is provided with a second sliding groove 203, an upper end of the first folding rod 23 is pivoted to the bottom portion of the enclosure 28, a lower portion of the first folding rod 23 is slidably connected to the second sliding groove 203, an upper end of the second folding rod 24 is slidably connected in the first sliding groove 201, a lower portion of the second folding rod 24 is pivoted to the bottom base 27, a middle portion of the first folding rod 23 and a middle portion of the second folding rod 24 are hinged with each other, a locking mechanism 25 that locks the lower portion of the first folding rod 23 when the carrycot 2 is unfolded is disposed on the bottom base 27, and a second unlocking mechanism 26 for driving the locking mechanism 25 to unlock to enable the carrycot 2 to be folded is further disposed on the bottom base 27.

FIG. 3 shows an unfolded state of the carrycot. At this time, the locking mechanism 25 locks the lower portion of the first folding rod 23 into the second sliding groove 203, and after the second unlocking mechanism 26 drives the locking mechanism 25 to unlock, the lower portion of the first folding rod 23 moves leftwards along the second sliding groove 203 (referring to FIG. 3) to implement folding, thus achieving the advantage of convenient operation.

In this embodiment, the locking mechanism 25 includes a locking base 251, a lock tongue 252, and a locking spring 253, the locking base 251 is disposed on a bottom portion of the bottom base 27, the lock tongue 252 is slidably connected to the locking base 251, and the locking spring 253 is disposed on the locking base 251 to drive the lock tongue 252 to extend out to lock the lower portion of the first folding rod 23. The lock tongue 252 extends into the second sliding groove 203 under the action of the locking spring 253, so that the lower portion of the first folding rod 23 may be locked into the second sliding groove 203, to maintain the unfolded state.

The second unlocking mechanism 26 includes a second unlocking base 261, a second unlocking block 262, and a third unlocking pull wire 263, the second unlocking base 261 is disposed on the bottom base 27, and the second unlocking block 262 is slidably connected to the second unlocking base 261; and one end of an outer tube of the third unlocking pull wire 263 is connected to the second unlocking base 261, the other end of the outer tube of the third unlocking pull wire 263 is connected to the locking base 251, one end of an inner core of the third unlocking pull wire 263 is connected to the second unlocking block 262, and the other end of the inner core of the third unlocking pull wire 263 is connected to the lock tongue 252. When unlocking is needed, the second unlocking block 262 only needs to be driven to move, and the second unlocking block 262 can drive the inner core of the third unlocking pull wire 263, thereby driving the second unlocking block 262 to retract into the second unlocking base 261 to implement unlocking, thus achieving the advantage of convenient operation.

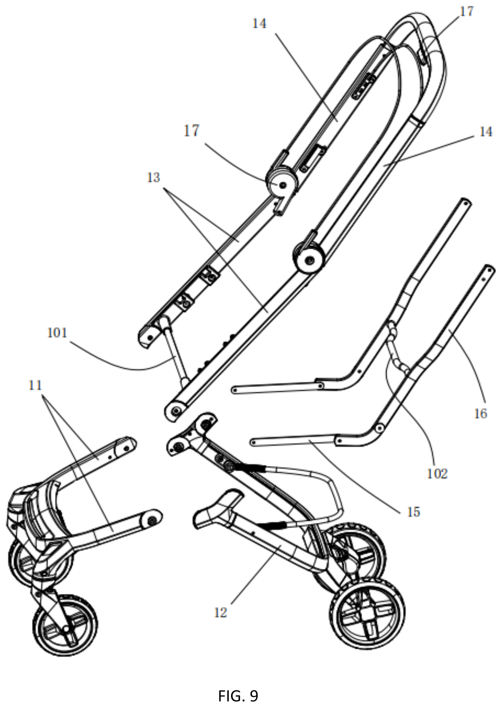

As shown in FIG. 9 to FIG. 13, in this embodiment, the frame 1 includes a front leg 11, a front wheel assembly 111, a rear leg 12, a rear wheel assembly 121, a middle connecting rod 13, a hand push rod 14, a first linkage rod 15, and a second linkage rod 16, the front wheel assembly 111 is disposed at a lower end of the front leg 11, the rear wheel assembly 121 is disposed at a lower end of the rear leg 12, one end of the front leg 11 is pivoted to the rear leg 12, one end of the middle connecting rod 13 is pivoted to the rear leg 12, a lower end of the hand push rod 14 is pivoted to the other end of the middle connecting rod 13, one end of the first linkage rod 15 is hinged to the front leg 11, the other end of the first linkage rod 15 is hinged to a lower end of the second linkage rod 16, a lower portion of the second linkage rod 16 is hinged to the rear leg 12, an upper end of the second linkage rod 16 is hinged to the hand push rod 14, so that when the hand push rod 14 is driven to be folded relative to the middle connecting rod 13, the middle connecting rod 13 and the front leg 11 can be driven to rotate relative to the rear leg 12 to implement folding, the first support rod 101 is disposed on the middle connecting rod 13, the second support rod 102 is disposed on the second linkage rod 16, and a frame locking assembly 17 for locking a relative position between the middle connecting rod 13 and the hand push rod 14 after the frame 1 is unfolded is disposed between the middle connecting rod 13 and the hand push rod 14. According to the present invention, when the frame is folded, the frame locking assembly 17 is first made to release a locking relationship between the middle connecting rod 13 and the hand push rod 14, then the hand push rod 14 is driven to be folded relative to the middle connecting rod 13, meanwhile, the front leg is driven to be folded relative to the rear leg, and the middle connecting rod 13 is driven to be folded relative to the rear leg, so that the folding can be completed. The first linkage rod 15 and the second linkage rod 16 have two functions, one of which is used for improving the overall stability and reliability of the frame, and the other is used for linking the middle connecting rod, the hand push rod, and the rear leg during folding, so that the folding is more convenient.

In this embodiment, the frame locking assembly 17 is used for locking the middle connecting rod 13 and the hand push rod 14 after the middle connecting rod 13 and the hand push rod 14 are unfolded. The frame locking assembly 17 includes an upper locking joint 171, a lower locking joint 172, a locking switching block 173, a reset member 174 (which may be a spring), a rotary unlocking block 175, a fourth unlocking pull wire 176, and an unlocking switch 178, the upper locking joint 171 is connected to the lower end of the hand push rod 14, the lower locking joint 172 is connected to an upper end of the middle connecting rod 13, the upper locking joint 171 is rotatably connected to the lower locking joint 172, the upper locking joint 171 is provided with a first accommodating cavity 17101, the lower locking joint 172 is provided with a second accommodating cavity 17201, the locking switching block 173 can slide in an axial direction between the first accommodating cavity 17101 and the second accommodating cavity 17201, the locking switching block 173 is provided with a locking protruding edge 1731, a first locking concave groove 17102 matched with the locking protruding edge 1731 is disposed in the first accommodating cavity 17101, a second locking concave groove 17202 matched with the locking protruding edge 1731 is disposed in the second accommodating cavity 17201, the reset member 174 is disposed in the second accommodating cavity 17201 and is used for enabling the locking protruding edge 1731 on the locking switching block 173 to be simultaneously clamped into the first locking concave groove 17102 and the second locking concave groove 17202, the rotary unlocking block 175 is rotated in the second accommodating cavity 17201, a guide inclined surface 1750 is disposed between the rotary unlocking block 175 and the second accommodating cavity 17201, when the unlocking block 175 is rotated, the locking protruding edge 1731 on the locking switching block 173 can be pushed to be disengaged from the first locking concave groove 17102 to unlock, one end of an inner core of the fourth unlocking pull wire 176 is connected to the rotary unlocking block 175, and the other end of the inner core of the fourth unlocking pull wire 176 is connected to the unlocking switch 178. During the specific locking, the reset member 174 enables the locking protruding edge 1731 on the locking switching block 173 to be simultaneously clamped into the first locking concave groove 17102 and the second locking concave groove 17202, so that the upper locking joint 171 cannot rotate relative to the lower locking joint 172; when it is necessary to unlock, the unlocking switch 178 is pressed, the unlocking switch 178 drives the inner core of the fourth unlocking pull wire 176 to drive the rotary unlocking block 175 to rotate, and when the rotary unlocking block 175 rotates, under the action of the guide inclined surface 1750, the rotary unlocking block 175 can push the locking protruding edge 1731 on the locking switching block 173 to be disengaged from the first locking concave groove 17102, so that the unlocking is implemented, and the upper locking joint 171 can rotate relative to the lower locking joint 172; and after the acting force on the unlocking switch 178 is released, the locking switching block 173 is reset under the action of the reset member 174 to implement locking again, thus achieving the advantage of convenient unlocking.

In the above description, the embodiments are only used to further describe the technical content of the present invention to facilitate easier understanding of the reader, but this does not mean that the embodiments of the present invention are limited thereto.

Those skilled in the art will recognize that many modifications and variations are possible that will achieve the same goals and that these embodiments still fall within the true spirit and scope of the invention disclosed.

It is also to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A stroller, comprising:
a foldable frame (1) comprising a first support rod (101) and a second support rod (102), the distance between the first and second support rods (101, 102) being able to vary in the process of folding or unfolding the frame (1) ; and
a device (2) for receiving a child, wherein the device (2) can be connected to both the first and second support rods (101, 102), the device (2) being provided with at least one first connecting assembly (21) connected to the first support rod (101) and at least one second connecting assembly (22) connected to the second support rod (102),
said at least one second connecting assembly (22) being able to move with the second support rod (102) when the frame (1) is folded or unfolded, so that said device (2) remains connected to the first support rod (101) through the first connecting assembly (21) and connected to the second support rod (102) through the second connecting assembly (22) regardless of any changes in the distance between the first support rod (101) and the second support rod (102).

2. A stroller according to claim 1, wherein the distance between said at least one first connecting assembly (21) and said at least one second connecting assembly (22) is aligned to the distance between the first support rod (101) and the second support rod (102) when the frame (1) is folded or unfolded.

3. A stroller according to claim 1 or 2, wherein the first and second support rods (101, 102), in the unfolded state of the frame (1), are in a substantially horizontal plane and support the device (2) for receiving a child ;
and wherein during the process of the frame (1) being folded, the plane defined by the first and second support rods (101, 102) changes gradually from a substantially horizontal level to a non-horizontal level and thus turns the device into a non-used position;
during the process of the frame (1) being unfolded, the plane defined by the first and second support rods (101, 102) changes gradually from a non-horizontal level to a substantially horizontal level and thus turns the device into the position for receiving a child.

4. A stroller according to any preceding claims, wherein the at least one first connecting assembly (21) is detachably connected to the first support rod (101), and the at least one second connecting assembly (22) is detachably connected to the second support rod (102).

5. A stroller according to any preceding claims, wherein the at least one second connecting assembly (22) comprises a guide rail (221) and a sliding base (222), the guide rail (221) is disposed on the bottom portion of the device (2), the sliding base (222) is slidably connected to the guide rail (221), and the sliding base (222) is connected to the second support rod (102).

6. A stroller according to claim 5, wherein an elastic member (223) for driving the sliding base (222) to reset is disposed on the bottom portion of the device (2).

7. A stroller according to claim 5 or 6, wherein the at least one first connecting assembly (21) comprises a first connecting base (211), a first clamping hook (212), and a first torsion spring (213), the first connecting base (211) being provided with a first concave groove (2110) for positioning the first support rod (101), a middle portion of the first clamping hook (212) being pivoted to the first connecting base (211), and the first torsion spring (213) being disposed on the first connecting base (211) to drive the first clamping hook (212) to lock the first support rod (101) into the first concave groove (2110); and
the sliding base (222) being provided with a second concave groove (2220) for positioning the second support rod (102), a second clamping hook (224) and a second torsion spring (225) being disposed on the sliding base (222), a middle portion of the second clamping hook (224) being pivoted to the sliding base (222), the second torsion spring (225) being disposed on the sliding base (222) to drive the second clamping hook (224) to lock the second support rod (102) into the second concave groove (2220).

8. A stroller according to claim 7, wherein the first clamping hook and second clamping hook are configured in opposite directions.

9. A stroller according to claim 7 or 8, wherein a first unlocking mechanism (23) simultaneously driving the first clamping hook (212) and the second clamping hook (224) to unlock is disposed on the bottom portion of the device (2).

10. A stroller according to claim 9, wherein the first unlocking mechanism (23) comprises a first unlocking base (231), a first unlocking block (232), a first unlocking pull wire (233), and a second unlocking pull wire (234), the first unlocking base (231) being disposed on the bottom portion of the device (2), and the first unlocking block (232) being slidably connected to the first unlocking base (231); one end of an outer tube of the first unlocking pull wire (233) being connected to the first unlocking base (231), the other end of the outer tube of the first unlocking pull wire (233) being connected to the first connecting base (211), one end of an inner core of the first unlocking pull wire (233) being connected to the first unlocking block (232), and the other end of the inner core of the first unlocking pull wire (233) being connected to the first clamping hook (212); and one end of an outer tube of the second unlocking pull wire (234) being connected to the first unlocking base (231), the other end of the outer tube of the second unlocking pull wire (234) being connected to the sliding base (222), one end of an inner core of the second unlocking pull wire (234) being connected to the first unlocking block (232), and the other end of the inner core of the second unlocking pull wire (234) being connected to the second clamping hook (224), so that the first clamping hook (212) and the second clamping hook (224) can be simultaneously driven to unlock when the first unlocking block (232) is driven.

11. A stroller according to any preceding claims, wherein the device is a seat or a carrycot.

12. A stroller according to any preceding claims, wherein the device is a carrycot foldable heightwise/in height direction.

13. A device (2) for receiving a child adapted to be mounted on a stroller frame (1) according to any one of claims 1 to 12, comprising at least one first connecting assembly (21), for being connected to a first support rod (101) of the stroller frame (1), and at least one second connecting assembly (22), for being connected to a second support rod (102) of the stroller frame (1), wherein said at least one second connecting assembly (22) is able to move with the second support rod (102) when the frame (1) is folded or unfolded, so that said device (2) remains connected to the first support rod (101) through the first connecting assembly (21) and connected to the second support rod (102) through the second connecting assembly (22) during folding and unfolding of the frame (1).

14. The device for receiving a child on a stroller frame according to claim 13, wherein the at least one first connecting assembly (21) can be detachably connected to the first support rod (101), and the at least one second connecting assembly (22) can be detachably connected to the second support rod (102).

15. The device for receiving a child on a stroller frame according to claim 13 or 14, wherein the at least one second connecting assembly (22) comprises a guide rail (221) and a sliding base (222), the guide rail (221) is disposed on the bottom portion of the device (2), the sliding base (222) is slidably connected to the guide rail (221), and the sliding base (222) is connected to the second support rod (102).
